(19) Europäisches Patentamt
European Patent Office
Office européen des brevets

(11) **EP 4 696 510 A1**

(12) **EUROPEAN PATENT APPLICATION**
published in accordance with Art. 153(4) EPC

(43) Date of publication:
**18.02.2026 Bulletin 2026/08**

(21) Application number: **24788547.8**

(22) Date of filing: **25.03.2024**

(51) International Patent Classification (IPC):
***B41J 2/01*** *(2006.01)*       ***B41J 2/21*** *(2006.01)*

(52) Cooperative Patent Classification (CPC):
**B41J 2/01; B41J 2/21**

(86) International application number:
**PCT/JP2024/011587**

(87) International publication number:
**WO 2024/214518 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.04.2023 JP 2023065033**

(71) Applicant: **FUJIFILM Corporation
Tokyo 106-8620 (JP)**

(72) Inventors:
• **MAIDA, Noriaki**
**Ashigarakami-gun, Kanagawa 258-8577 (JP)**
• **HIRAKAWA, Atsuko**
**Ashigarakami-gun, Kanagawa 258-8577 (JP)**

(74) Representative: **HGF**
**HGF Limited
4th Floor, 1 City Square
Leeds LS1 2ES (GB)**

(54) **PRINTING SYSTEM**

(57) Provided is a printing system that calculates a correction value for correcting image data based on a state of a substrate. In a printing system that prints an image by ejecting a liquid onto a substrate, a transport device transports the substrate in an order of a first ejection device that ejects a first liquid onto the substrate based on first image data, a first measurement device, a first drying device, a second measurement device, and a second ejection device, the first measurement device and the second measurement device each detect a mark printed on the substrate with the first liquid to measure a state of the substrate, and the first ejection device corrects the first image data based on a measurement result of the first measurement device and a measurement result of the second measurement device.

FIG. 3

**Description**

**BACKGROUND OF THE INVENTION**

1. Field of the Invention

The present invention relates to a printing system, and more particularly to a printing system for acquiring a state of a substrate.

2. Description of the Related Art

Printing devices that print images on a substrate by ejecting ink onto the substrate are known. The substrate may expand and contract due to tension in a transport direction applied during transport and heat applied during drying, and the size of the printed image may not be a desired size.

In response to such a problem, image data is corrected based on expansion/contraction information for a substrate.

For example, JP2021-142648A describes a printing device that prints on a front side of a printing medium and then prints on a back side of the printing medium, the printing device comprising a front side printing head that prints a front side image based on front side image data over a front page length on the front side of the printing medium transported in a predetermined transport direction, a back side printing head that prints a back side image based on back side image data on the printing medium after the front side image has been printed, a data correction unit that corrects an image size of the front side image data based on expansion/contraction information in the transport direction after the front side image has been printed and generates the front side image data as corrected front side image data, and a print control unit that operates the front side printing head to perform printing on the front side of the printing medium based on the corrected front side image data and operates the back side printing head to perform printing on the back side of the printing medium.

**SUMMARY OF THE INVENTION**

There is a problem in that the expansion/contraction information described in JP2021-142648A is not sufficient for correcting image data.

The present invention has been made in view of the above circumstances, and an object of the present invention is to provide a printing system that calculates a correction value for correcting image data based on a state of a substrate.

In order to achieve the above object, according to a first aspect of the present disclosure, there is provided a printing system that prints an image by ejecting a liquid onto a substrate, the printing system comprising: a transport device that transports the substrate along a transport path; a first ejection device that ejects a first liquid onto the substrate based on first image data; a first measurement device that measures a state of the substrate; a first drying device that dries the liquid ejected onto the substrate; a second measurement device that measures the state of the substrate; a second ejection device that ejects a second liquid onto the substrate based on second image data; at least one processor; and at least one memory that stores an instruction to be executed by the at least one processor, in which the transport device transports the substrate in an order of the first ejection device, the first measurement device, the first drying device, the second measurement device, and the second ejection device, the first measurement device and the second measurement device each detect a mark printed on the substrate with the first liquid to measure the state of the substrate, and the at least one processor calculates a first correction value for correcting the first image data based on a measurement result of the first measurement device and a measurement result of the second measurement device.

According to the present aspect, it is possible to calculate a correction value for correcting image data based on a state of the substrate.

According to a second aspect of the present disclosure, it is preferable that in the printing system according to the first aspect, the at least one processor causes the first correction value to be displayed on a display.

According to a third aspect of the present disclosure, it is preferable that in the printing system according to the first or second aspect, the at least one processor corrects the first image data with the first correction value.

According to a fourth aspect of the present disclosure, it is preferable that in the printing system according to any one of the first to third aspects, the first ejection device ejects the first liquid based on the first image data corrected based on the first correction value.

In order to achieve the above object, according to a fifth aspect of the present disclosure, there is provided a printing system that prints an image by ejecting a liquid onto a substrate, the printing system comprising: a transport device that transports the substrate along a transport path; a first ejection device that ejects a first liquid onto the substrate based on first image data; a first measurement device that measures a state of the substrate; a first drying device that dries the liquid ejected onto the substrate; a second measurement device that measures the state of the substrate; a second ejection device that ejects a second liquid onto the substrate based on second image data; a second drying device that dries the liquid ejected onto the substrate; a third measurement device that measures the state of the substrate; at least one processor; and at least one memory that stores an instruction to be executed by the at least one processor, in which the transport device transports the substrate in an order of the first ejection device, the first measurement device, the first drying device, the second measurement device, the second ejection device, the second drying device, and the third measurement device, and the at least one processor calculates a first correction value for correcting the first image data based on a measurement result of the first measurement device and a measurement result of the third measurement device, and calculates a second correction value for correcting the second image data based on a measurement result of the second measurement device and the measurement result of the third measurement device.

According to the present aspect, it is possible to calculate a correction value for correcting image data based on a state of the substrate.

According to a sixth aspect of the present disclosure, it is preferable that in the printing system according to the fifth aspect, the at least one processor causes the first correction value and the second correction value to be displayed on a display.

According to a seventh aspect of the present disclosure, it is preferable that in the printing system according to the fifth or sixth aspect, the first measurement device, the second measurement device, and the third measurement device each detect a mark printed on the substrate with the first liquid to measure the state of the substrate.

According to an eighth aspect of the present disclosure, it is preferable that in the printing system according to any one of the fifth to seventh aspects, the at least one processor corrects the first image data with the first correction value, and corrects the second image data with the second correction value.

According to a ninth aspect of the present disclosure, it is preferable that in the printing system according to any one of the fifth to eighth aspects, the first ejection device ejects the first liquid based on the first image data corrected based on the first correction value, and the second ejection device ejects the second liquid based on the second image data corrected based on the second correction value.

According to a tenth aspect of the present disclosure, it is preferable that in the printing system according to any one of the first to ninth aspects, the state of the substrate includes a state of the substrate with respect to a first direction in which the substrate is transported, and the state of the substrate with respect to the first direction is measured based on an interval between a plurality of the marks.

According to an eleventh aspect of the present disclosure, it is preferable that the printing system according to the tenth aspect further comprises an optical mark sensor that detects the interval between the marks.

According to a twelfth aspect of the present disclosure, it is preferable that in the printing system according to any one of the first to eleventh aspects, the state of the substrate includes a state of the substrate with respect to a second direction orthogonal to the first direction, and the state of the substrate with respect to the second direction is measured based on a width of the substrate in the second direction.

According to a thirteenth aspect of the present disclosure, it is preferable that the printing system according to the twelfth aspect further comprises an optical edge sensor that detects the width of the substrate in the second direction.

According to a fourteenth aspect of the present disclosure, it is preferable that in the printing system according to any one of the fifth to thirteenth aspects, a measurement timing in the second measurement device is later than a measurement timing in the first measurement device, and a measurement timing in the third measurement device is later than the measurement timing in the second measurement device.

According to a fifteenth aspect of the present disclosure, it is preferable that in the printing system according to any one of the fifth to fourteenth aspects, the first measurement device, the second measurement device, and the third measurement device each measure a state of a first measurement position of the substrate.

According to a sixteenth aspect of the present disclosure, it is preferable that in the printing system according to any one of the first to fifteenth aspects, the second ejection device ejects the second liquid onto an image printed by the first ejection device.

According to a seventeenth aspect of the present disclosure, it is preferable that in the printing system according to any one of the first to fifteenth aspects, the substrate is transparent, and the second liquid includes white ink.

According to the aspects of the present invention, it is possible to calculate a correction value for correcting image data based on the state of the substrate.

**BRIEF DESCRIPTION OF THE DRAWINGS**

FIG. 1 is a diagram showing an example of a printing system.
FIG. 2 is a diagram for describing a mechanism by which expansion and contraction of a substrate in a transport direction occurs.

FIG. 3 is a diagram showing an example of the printing system according to the present embodiment.
FIG. 4 is a diagram for describing measurement of a state of a substrate in the transport direction.
FIG. 5 is a diagram for describing measurement of a state of a substrate in a width direction.
FIG. 6 is a block diagram showing an electric configuration of an ink jet printing system.
FIG. 7 is a flowchart showing steps of a method for manufacturing a printed matter in the ink jet printing system.
FIG. 8 is a diagram for describing printing based on corrected image data.

## DESCRIPTION OF THE PREFERRED EMBODIMENTS

Hereinafter, a preferred embodiment of the present invention will be described in detail with reference to the accompanying drawings. In the following description, a transport direction refers to a traveling direction of a substrate along a transport path of the substrate, and a width direction refers to a direction orthogonal to the traveling direction.

<Description of Problem>

[Configuration of Ink Jet Printing System]

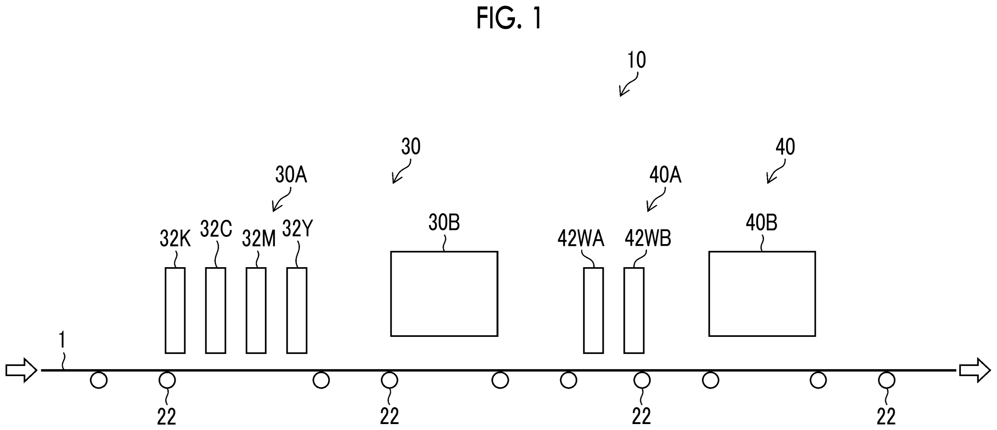

FIG. 1 is a diagram showing an example of a printing system. An ink jet printing system 10 shown in FIG. 1 is a printing system that transports a long non-permeable substrate 1 and prints a print image including a color plate image and a white plate image on a printing surface of the substrate 1.

The substrate 1 is a non-permeable medium, for example a transparent film substrate used for flexible packaging. The film substrate is polyethylene terephthalate (PET), oriented polypropylene (OPP), and nylon (NY), for example. The ink jet printing system 10 manufactures a reverse-printed matter in which the printing target is visible from the non-printed surface, which is the surface opposite the printing surface of the substrate 1.

The term "non-permeable" refers to being non-permeable to aqueous ink, which will be described later. The term "flexible packaging" refers to packaging made of a material that deforms depending on the shape of an item to be packaged. The term "transparent" means that a light transmittance of visible light is 30% or more and 100% or less and preferably 70% or more and 100% or less.

The ink jet printing system 10 includes a transport device 20, a first printing device 30, and a second printing device 40.

The transport device 20 includes a plurality of pass rollers 22. The transport device 20 transports the substrate 1 along a transport path from an unwinding roll (not shown) to a winding roll (not shown) in a roll-to-roll manner. The substrate 1 may be transported in a state where tension is applied thereto. The moving speed (transportation speed) of the substrate 1 in the transport direction is, for example, 50 m/min.

In the transport path of the substrate 1, the first printing device 30 and the second printing device 40 are disposed in that order from the upstream side.

The first printing device 30 includes a first ejection device 30A and a first drying device 30B. The substrate 1 transported to the first printing device 30 is guided by the pass rollers 22 and is transported to the first ejection device 30A.

The first ejection device 30A comprises ink jet heads 32K, 32C, 32M, and 32Y. The ink jet heads 32K, 32C, 32M, and 32Y eject black (K), cyan (C), magenta (M), and yellow (Y) colors of ink (an example of a "liquid" and an example of a "first liquid"), respectively. Each color of ink is an aqueous ink in which a coloring material such as a dye or pigment is dissolved or dispersed in water and a water-soluble solvent. The ink jet heads 32K, 32C, 32M, and 32Y are each supplied with color ink of a corresponding color from an ink tank (not shown) via a piping path (not shown).

The ink jet heads 32K, 32C, 32M, and 32Y are disposed along the transport path of the substrate 1 at a regular interval. The ink jet heads 32K, 32C, 32M, and 32Y are each a line-type recording head capable of printing on the substrate 1 transported by the transport device 20 in one scan. Each of the ink jet heads 32K, 32C, 32M, and 32Y may be configured by connecting a plurality of head modules in the width direction of the substrate 1.

The ink jet heads 32K, 32C, 32M, and 32Y are disposed such that their nozzle surfaces (not shown) face the transport path of the substrate 1. A plurality of nozzles which are ejection ports for ejecting color ink are two-dimensionally arranged on the nozzle surface of each of the ink jet heads 32K, 32C, 32M, and 32Y.

Liquid droplets of color ink are ejected from at least one of the ink jet head 32K, 32C, 32M, or 32Y based on image data of a color plate (an example of "first image data") toward the printing surface of the substrate 1 transported by the transport device 20, and the ejected liquid droplets adhere to the printing surface of the substrate 1, thereby printing a color plate image on the printing surface of the substrate 1.

Although the configuration where ink of four colors is used has been described herein, ink colors and the number of colors are not limited to the present embodiment. For example, an ink jet head that ejects a light ink such as light magenta or light cyan, a special color ink such as green, orange, or violet, a clear ink, or a metallic ink may be added. Further, an order in which the ink jet heads of each color are disposed is not limited.

The substrate 1 on which the color plate image has been printed by the first ejection device 30A is guided by the pass rollers 22 and is transported to the first drying device 30B.

The first drying device 30B is a device that dries the color ink on the printing surface of the substrate 1 transported by the transport device 20. The first drying device 30B comprises a plurality of hot air heaters (not shown).

The hot air heaters are each disposed such that an air outlet (not shown) faces the printing surface of the substrate 1. Each hot air heater functions as a heating device that blows hot air from an air outlet toward the printing surface of the substrate 1 to heat the substrate 1 and dry the color ink adhering to the printing surface.

The substrate 1 transported to the outside of the first drying device 30B has the color ink adhering to the printing surface dried. The term "drying" refers to a state in which, for example, in a case in which the substrate 1 is wound, the ink on the printing surface of the substrate 1 does not show through to the non-printed surface.

The substrate 1 on which the color ink is dried by the first drying device 30B is discharged from the first printing device 30 and is transported to the second printing device 40.

The second printing device 40 includes a second ejection device 40A and a second drying device 40B. The substrate 1 transported to the second printing device 40 is guided by the pass rollers 22 and is transported to the second ejection device 40A.

The second ejection device 40A comprises ink jet heads 42WA and 42WB. The ink jet heads 42WA and 42WB both eject white (W) ink (an example of a "second liquid"), which is a white aqueous ink. The ink jet heads 42WA and 42WB are each supplied with white ink from an ink tank (not shown) via a piping path (not shown).

The ink jet heads 42WA and 42WB are disposed along the transport path of the substrate 1 at a regular interval. The ink jet heads 42WA and 42WB are each a line-type recording head capable of printing on the substrate 1 transported by the transport device 20 in one scan. Each of the ink jet heads 42WA and 42WB may be configured by connecting a plurality of head modules in the width direction of the substrate 1.

The ink jet heads 42WA and 42WB are disposed such that their nozzle surfaces (not shown) face the transport path of the substrate 1. A plurality of nozzles which are ejection ports for ejecting white ink are two-dimensionally arranged on the nozzle surface of each of the ink jet heads 42WA and 42WB.

Liquid droplets of white ink are ejected from at least one of the ink jet head 42WA or 42WB based on image data of a white plate (an example of "second image data") toward the printing surface of the substrate 1 transported by the transport device 20, and the ejected liquid droplets adhere to the printing surface of the substrate 1, thereby printing a white plate image on the printing surface of the substrate 1.

Here, image data of the color plate and image data of the white plate are separated from the same print image data. Therefore, the ink jet heads 42WA and 42WB eject white ink to be superimposed on the color plate images printed by the ink jet heads 32K, 32C, 32M, and 32Y. Accordingly, a white plate image is printed on the printing surface of the substrate 1 to be superimposed on the color plate image.

The substrate 1 on which the white plate image has been printed by the second ejection device 40A is guided by the pass rollers 22 and is transported to the second drying device 40B.

The second drying device 40B is a device that dries the white ink on the printing surface of the substrate 1 transported by the transport device 20. The configuration of the second drying device 40B is similar to that of the first drying device 30B, and therefore detailed description thereof will be omitted.

The substrate 1 on which the white ink is dried by the second drying device 40B is discharged from the second printing device 40.


[Occurrence of Expansion and Contraction of Substrate and Image Misalignment]


In the ink jet printing system 10, in a case in which image data divided into color and white plates is printed at a scale of 100% (= correct dimension) on the substrate 1 that is prone to thermal expansion, the substrate 1 softened by heat is stretched and transported, resulting in a printed matter in which the color plate image and the white plate image are printed in a misaligned manner.

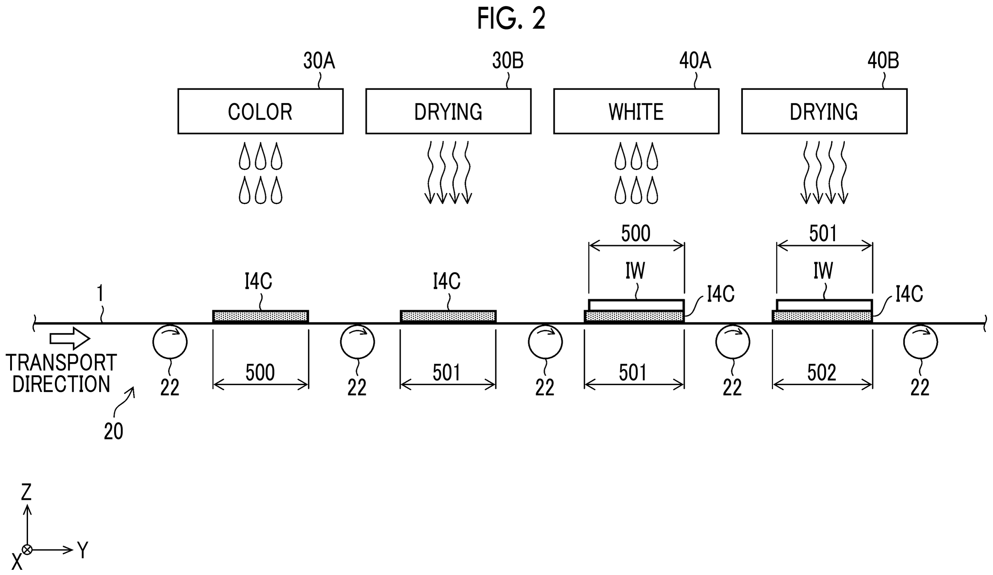

FIG. 2 is a diagram for describing a mechanism by which expansion and contraction of a substrate in the transport direction occurs. FIG. 2 shows the side surface of the substrate 1 being transported through the first ejection device 30A, the first drying device 30B, the second ejection device 40A, and the second drying device 40B in that order.

A color plate image I4C shown in FIG. 2 is an image printed by the first ejection device 30A based on the image data of the color plate. The correct dimension of the image data of the color plate in the transport direction is 500 mm. Therefore, the length of the color plate image I4C in the transport direction in a case of being printed by the first ejection device 30A is 500 mm.

The substrate 1 on which the color plate image I4C is printed is heated in the first drying device 30B, and the ink of the color plate image I4C is dried. The length of the color plate image I4C in the transport direction in a case of being discharged from the first drying device 30B is, for example, 501 mm because the substrate 1 is extended by heat.

A white plate image IW shown in FIG. 2 is an image printed by the second ejection device 40A based on the image data of the white plate. The white plate image IW is printed on the color plate image I4C in a superimposed manner. The correct dimension of the image data of the white plate in the transport direction is 500 mm, the same as that of the image data of the color plate. Therefore, the length of the white plate image IW in the transport direction in a case of being printed by the second ejection device 40A is 500 mm. On the other hand, the length of the color plate image I4C in the transport direction in a case of passing through the second ejection device 40A is 501 mm as described above. In a case in which the start of printing in the first ejection device 30A and the second ejection device 40A is aligned with the end part of the color plate image I4C and the white plate image IW on the upstream side in the transport direction, a 1 mm region (gap) where the white plate image IW is not printed is created at the position of the end part of the color plate image I4C on the downstream side in the transport direction (end position).

The substrate 1 on which the white plate image IW is printed is heated in the second drying device 40B, and the ink of the white plate image IW is dried. The lengths of the color plate image I4C and the white plate image IW in the transport direction in a case of being discharged from the second drying device 40B are, for example, 502 mm and 501 mm, respectively, because the substrate 1 is extended by heat.

As described above, with the ink jet printing system 10, the following phenomenon occurs.

(Phenomenon 1) In the transport direction of the substrate 1, a color plate image is printed in a size larger than the correct dimension (500 mm).

(Phenomenon 2) In the transport direction of the substrate 1, the white plate image is printed in a size larger than the correct dimension and smaller than the previously printed color plate image. Therefore, a gap is created at the end position.

Since the substrate 1 extending in the transport direction shrinks in the width direction, the substrate 1 is printed in a size smaller than the correct dimension in the width direction.

In order to prevent the occurrence of the above phenomenon 1 and phenomenon 2, an "image size adjustment work" is carried out in which the size of the color plate image and the size of the white plate image are measured with a steel ruler on a test printed matter made in advance to calculate the "image size magnification of the image data", and the calculated image size magnification is then taken into account each time the printed matter is reprinted.

However, the method of directly measuring a printed matter with a steel ruler has an accuracy of at most 0.5 mm by eye, and cannot provide an accurate measurement in a case in which the edge of the color plate image and the edge of the white plate image to be measured overlap or are curved. Moreover, the printed matter has to be cut out each time a measurement is made, which has a problem of very poor work efficiency.

In contrast to this, in the present embodiment, the deformation amount of the substrate in the transport direction and the deformation amount of the substrate in the width direction are converted into numerical values to acquire the state of the substrate.

<Embodiment>

[Overall Configuration of Printing System]

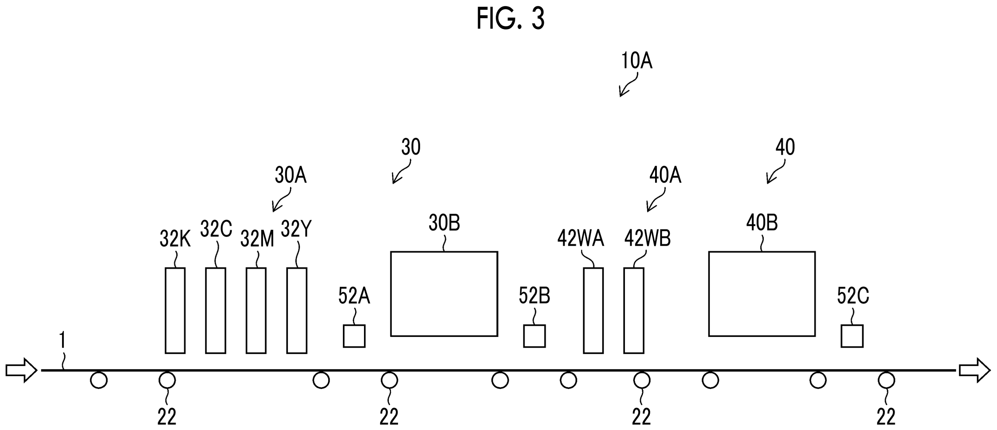

FIG. 3 is a diagram showing an example of the printing system according to the present embodiment. Note that parts common to those in FIG. 1 are denoted by the same reference numerals, and detailed description thereof will be omitted.

An ink jet printing system 10A shown in FIG. 3 includes a substrate information acquisition unit 50 that measures the state of the substrate 1. The substrate information acquisition unit 50 includes a first measurement device 52A, a second measurement device 52B, and a third measurement device 52C.

The first measurement device 52A is disposed at a first position on the transport path of the substrate 1 between the first ejection device 30A and the first drying device 30B. The second measurement device 52B is disposed at a second position on the transport path of the substrate 1 between the first drying device 30B and the second ejection device 40A. The third measurement device 52C is disposed at a third position which is the exit of the second drying device 40B on the transport path of the substrate 1 (an example of a "downstream side").

That is, the transport device 20 transports the substrate 1 in the order of the first ejection device 30A, the first measurement device 52A, the first drying device 30B, the second measurement device 52B, the second ejection device 40A, the second drying device 40B, and the third measurement device 52C.

[Configuration of Measurement Device]

Since the first measurement device 52A, the second measurement device 52B, and the third measurement device 52C have the same configuration, they will be described as the measurement device 52 unless there is a particular need to distinguish between them. The measurement device 52 measures the state of the substrate 1 in the transport direction (an example of a "first direction") and the state of the substrate 1 in the width direction (an example of a "second direction").

<<Measurement in Transport Direction>>

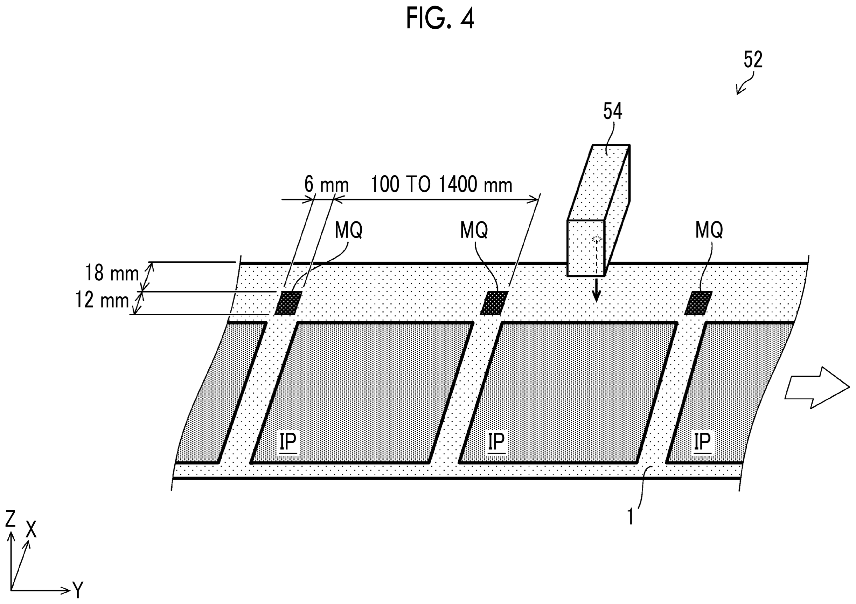

FIG. 4 is a diagram for describing the measurement of the state of the substrate 1 in the transport direction in the measurement device 52. The measurement device 52 comprises a mark sensor 54. In addition, the substrate 1 includes a cue mark MQ.

The mark sensor 54 is an optical mark sensor for detecting the cue mark MQ. The mark sensor 54 comprises a light projecting section (not shown) that projects light onto the substrate 1, and a light receiving section (not shown) that receives reflected light of the projected light. The mark sensor 54 detects the cue mark MQ based on a result of light reception by the light receiving section.

The cue mark MQ is a mark that indicates a printing start position of the desired print image IP. The cue mark MQ is printed on the edge of the substrate 1 by the first ejection device 30A (for example, the ink jet head 32K). The cue mark MQ is a rectangle having sides parallel to the transport direction and the width direction, and is a filled rectangle having a length of 6 mm in the transport direction and a length of 12 mm in the width direction. The cue mark MQ is disposed at a position 18 mm away from the end part of the substrate 1 in the width direction. Further, a plurality of cue marks MQ are disposed at intervals of 100 mm to 1400 mm in the transport direction of the substrate 1, depending on the size of the print image IP in the transport direction.

The measurement device 52 detects the cue mark MQ of the substrate 1 by the mark sensor 54, and acquires a numerical value of the deformation of the substrate 1 in the transport direction.

<<Measurement in Width Direction>>

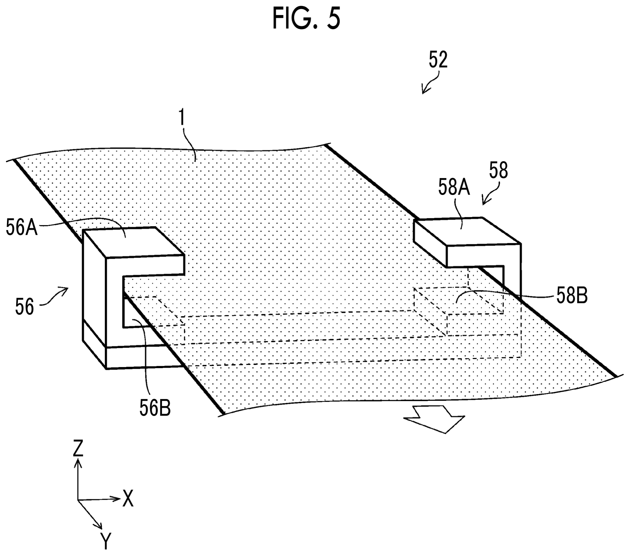

FIG. 5 is a diagram for describing the measurement of the state of the substrate 1 in the width direction in the measurement device 52. The measurement device 52 comprises a pair of edge sensors 56 and 58.

The edge sensor 56 is disposed on the operator side (OS) side of the substrate 1. The edge sensor 56 is an optical edge sensor comprising a light projecting section 56A that projects a band-shaped light orthogonal to the transport direction, and a light receiving section 56B that receives the light projected by the light projecting section 56A. The edge sensor 56 detects the edge position of the OS side of the substrate 1 based on a result of light reception by the light receiving section 56B.

The edge sensor 58 is disposed on the gear side (GS) side of the substrate 1. The edge sensor 58 is an optical edge sensor comprising a light projecting section 58A that projects a band-shaped light orthogonal to the transport direction, and a light receiving section 58B that receives the light projected by the light projecting section 58A. The edge sensor 58 detects the edge position of the GS side of the substrate 1 based on a result of light reception by the light receiving section 58B.

The measurement device 52 detects the edge positions at both ends in the width direction of the substrate 1 using the pair of edge sensors 56 and 58, and thereby acquires a numerical value of the deformation of the substrate 1 in the width direction.

[Electric Configuration of Printing System]

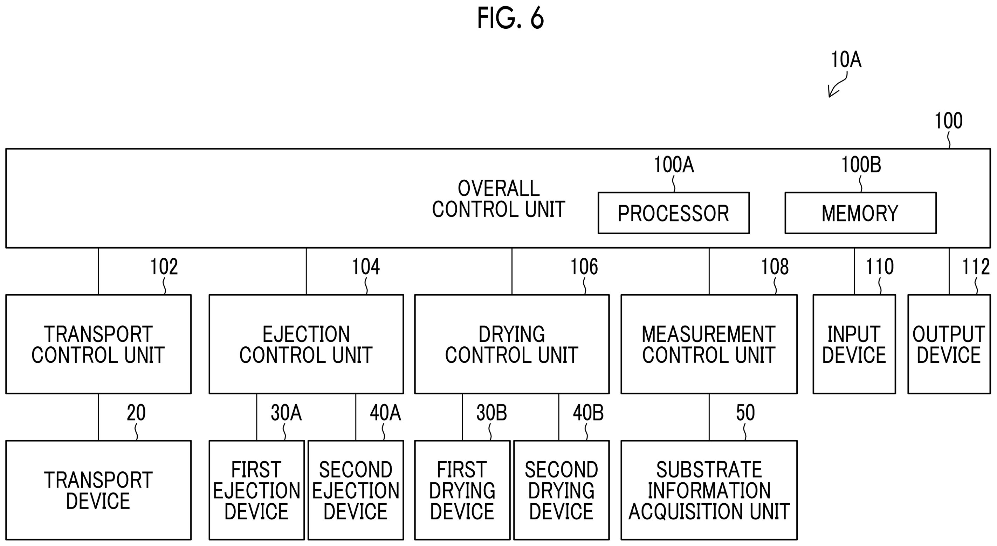

FIG. 6 is a block diagram showing the electric configuration of the ink jet printing system 10A. As shown in FIG. 6, the ink jet printing system 10A comprises an overall control unit 100, a transport control unit 102, an ejection control unit 104, a drying control unit 106, a measurement control unit 108, an input device 110, and an output device 112.

The overall control unit 100 overall controls each unit of the ink jet printing system 10. The overall control unit 100 comprises a processor 100A and a memory 100B.

The processor 100A executes instructions stored in the memory 100B. A hardware structure of the processor 100A is various processors as shown below. The various processors include a central processing unit (CPU) that is a general-purpose processor that acts as various functional units by executing software (programs), a graphics processing unit (GPU), which is a processor specialized for image processing, a programmable logic device (PLD) that is a processor whose circuit configuration can be changed after manufacture such as a field-programmable gate array (FPGA), a dedicated electrical circuit that is a processor having a circuit configuration designed exclusively for executing specific processing such as an application-specific integrated circuit (ASIC), and the like.

One processing unit may be configured by one of the various processors, or may be configured by the same or different types of two or more processors (for example, a plurality of FPGAs, a combination of a CPU and an FPGA, or a combination of a CPU and a GPU). In addition, a plurality of functional units may be configured by one processor. As an example of configuring a plurality of functional units via one processor, first, as represented by a computer, such as a client or a server, there is a form in which one processor is configured by a combination of one or more CPUs and software, and this processor acts as a plurality of functional units. Second, as represented by a system-on-chip (SoC) or the like, there is a form of using a processor for implementing the function of the entire system including a plurality of functional units with one integrated circuit (IC) chip. Thus, various functional units are configured by using one or more of the above-described various processors as hardware structures.

Furthermore, the hardware structure of these various processors is, more specifically, an electrical circuit (circuitry) in which circuit elements such as semiconductor elements are combined.

The memory 100B stores instructions to be executed by the processor 100A. The memory 100B includes a random-access memory (RAM) and a read-only memory (ROM) (not shown). The processor 100A executes software using various types of programs and parameters stored in the ROM with the RAM as a work area and executes various types of processing of the ink jet printing system 10A using the parameters stored in the ROM or the like.

The transport control unit 102 controls the transport device 20 to transport the substrate 1 along the transport path.

The ejection control unit 104 controls the first ejection device 30A to eject each color of ink from the ink jet heads 32K, 32C, 32M, and 32Y, and print a color plate image on the substrate 1. Furthermore, the ejection control unit 104 controls the second ejection device 40A to eject white ink from each of the ink jet heads 42WA and 42WB, and print a white plate image on the substrate 1.

The drying control unit 106 controls the first drying device 30B and the second drying device 40B to heat and dry the color ink and the white ink.

The measurement control unit 108 controls the substrate information acquisition unit 50 to measure the state of the substrate 1.

The input device 110 includes a mouse (not shown) and a keyboard (not shown), for example. The input device 110 receives inputs to the ink jet printing system 10A from a mouse and a keyboard.

The output device 112 includes a display (not shown), for example. The output device 112 presents information regarding the ink jet printing system 10A to a user.

The input device 110 and the output device 112 may comprise a communication interface (not shown) for transmitting and receiving information between the ink jet printing system 10A and other devices.

[Method for Manufacturing Printed Matter]

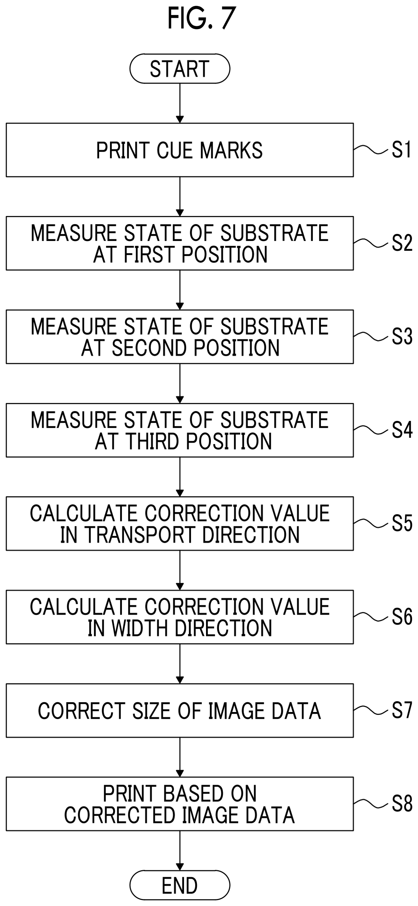

FIG. 7 is a flowchart showing steps of a method for manufacturing a printed matter in the ink jet printing system 10A. The method for manufacturing a printed matter includes acquiring expansion/contraction information for a substrate, correcting image data in accordance with the expansion/contraction information, and printing based on the corrected image data. The method for manufacturing a printed matter is realized by the processor 100A reading out a printed matter manufacturing program from the memory 100B and executing the printed matter manufacturing program. The printed matter manufacturing program may be provided via a communication interface.

In Step S1, the ejection control unit 104, in accordance with a command from the overall control unit 100, causes the first ejection device 30A to print a plurality of cue marks on the substrate 1. The plurality of cue marks are disposed, for example, at equal intervals.

In Step S2, the measurement control unit 108, in accordance with a command from the overall control unit 100, measures the state of the substrate 1 at the first position by the first measurement device 52A. That is, the first measurement device 52A acquires a numerical value of the deformation of the substrate 1 in the transport direction by the mark sensor 54, and acquires a numerical value of the deformation of the substrate 1 in the width direction by the pair of edge sensors 56 and 58 as the measurement result.

Here, the first measurement device 52A acquires a time interval T1 [unit: seconds] between the passage of two cue marks MQ. In addition, the first measurement device 52A acquires a width W1 [unit: mm] of the substrate 1.

In Step S3, the measurement control unit 108, in accordance with a command from the overall control unit 100, measures the state of the substrate 1 at the second position by the second measurement device 52B. That is, the second measurement device 52B acquires a numerical value of the deformation of the substrate 1 in the transport direction by the mark sensor 54, and acquires a numerical value of the deformation of the substrate 1 in the width direction by the pair of edge sensors 56 and 58 as the measurement result.

Here, the second measurement device 52B acquires a time interval T2 [unit: seconds] between the passage of two cue marks MQ. In addition, the second measurement device 52B acquires a width W2 [unit: mm] of the substrate 1.

It is preferable that the measurement timing in the second measurement device 52B is later than the measurement timing in the first measurement device 52A. It is preferable that the cue mark MQ detected by the mark sensor 54 of the second measurement device 52B is at the same position as the cue mark MQ detected by the mark sensor 54 of the first measurement device 52A in Step S2 (an example of a "first measurement position"). In addition, it is preferable that the width position of the substrate 1 detected by the pair of edge sensors 56 and 58 of the second measurement device 52B is the same position as the width position of the substrate 1 detected by the pair of edge sensors 56 and 58 of the first measurement device 52A in Step S2 (an example of the "first measurement position").

In Step S4, the measurement control unit 108, in accordance with a command from the overall control unit 100, measures the state of the substrate 1 at the third position by the third measurement device 52C. That is, the third measurement device 52C acquires a numerical value of the deformation of the substrate 1 in the transport direction by the mark sensor 54, and acquires a numerical value of the deformation of the substrate 1 in the width direction by the pair of edge sensors 56 and 58 as the measurement result.

Here, the third measurement device 52C acquires a time interval T3 [unit: seconds] between the passage of the two cue marks MQ. In addition, the third measurement device 52C acquires a width W3 [unit: mm] of the substrate 1.

It is preferable that the measurement timing in the third measurement device 52C is later than the measurement timing in the second measurement device 52B. It is preferable that the cue mark MQ detected by the mark sensor 54 of the third measurement device 52C is at the same position as the cue mark MQ detected by the mark sensor 54 of the first measurement device 52A in Step S2 (an example of the "first measurement position"). In addition, it is preferable that the width position of the substrate 1 detected by the pair of edge sensors 56 and 58 of the third measurement device 52C is the same position as the width position of the substrate 1 detected by the pair of edge sensors 56 and 58 of the first measurement device 52A in Step S2 (an example of the "first measurement position").

In Step S5, the overall control unit 100 calculates a first correction value for correcting the size of the image data in the transport direction, based on the state of the substrate 1 at each position acquired in Steps S2 to S4.

First, the overall control unit 100 acquires transportation speeds v1, v2, and v3 [unit: m/min] of the substrate 1 in the transport direction at the first position, the second position, and the third position. The transportation speeds v1, v2, and v3 may be measured by a speedometer (not shown), but here the set values set in the ink jet printing system 10A are used.

In addition, the overall control unit 100 calculates intervals L1, L2, and L3 [unit: mm] between the cue marks at the first position, the second position, and the third position based on the time intervals T1, T2, and T3 [unit: seconds] and the transportation speeds v1, v2, and v3 [unit: m/min] using the following Equations 1 to 3.

$$L1 = T1 \times v1/60 \times 10^3 \ldots \text{(Equation 1)}$$

$$L2 = T2 \times v2/60 \times 10^3 \ldots \text{(Equation 2)}$$

$$L3 = T3 \times v3/60 \times 10^3 \ldots \text{(Equation 3)}$$

Here, an image size magnification SL4C [unit: %] of the color plate image in the transport direction and an image size magnification SLW [unit: %] of the white plate image in the transport direction can be calculated using the following Equations 4 and 5, respectively.

$$SL4C = L3/L1 \times 100 \ldots \text{(Equation 4)}$$

$$SLW = L3/L2 \times 100 \ldots \text{(Equation 5)}$$

The image size magnification SL4C is a correction value for the image data of the color plate in the transport direction, and the image size magnification SLW is a correction value for the image data of the white plate in the transport direction.

In Step S6, the overall control unit 100 calculates a second correction value for correcting the size of the image data in the width direction, based on the state of the substrate 1 at each position acquired in Steps S2 to S4.

For example, an image size magnification SW4C [unit: %] of the color plate image in the width direction and an image size magnification SWW [unit: %] of the white plate image in the width direction can be calculated using the following Equations 6 and 7, respectively.

$$SW4C = W3/W1 \times 100 \ldots \text{(Equation 6)}$$

$$SWW = W3/W2 \times 100 \ldots \text{(Equation 7)}$$

The image size magnification SW4C is a correction value for the image data of the color plate in the width direction, and the image size magnification SWW is a correction value for the image data of the white plate in the width direction.

In Step S7, the overall control unit 100 corrects the size of the image data based on the correction values calculated in Steps S5 and S6. In a case in which the actual size of the image data in the transport direction is PL and the actual size of the image data in the width direction is PW, a size PL4C in the transport direction and a size PW4C in the width direction of the corrected image data of the color plate can be calculated using the following Equations 8 and 9, respectively.

$$PL4C = PL \times SL4C/100 \ ... \ (Equation \ 8)$$

$$PW4C = PW \times SW4C/100 \ ... \ (Equation \ 9)$$

Furthermore, a size PLW in the transport direction and a size PWW in the width direction of the corrected image data of the white plate can be calculated using the following Equations 10 and 11.

$$PLW = PL \times SLW/100 \ ... \ (Equation \ 10)$$

$$PWW = PW \times SWW/100 \ ... \ (Equation \ 11)$$

In Step S8, the ejection control unit 104, in accordance with a command from the overall control unit 100, causes printing to be performed based on the image data corrected in Step S7. That is, the ejection control unit 104 ejects each color of ink from the ink jet heads 32K, 32C, 32M, and 32Y based on the corrected image data of the color plate, and prints a color plate image on the substrate 1. Furthermore, the ejection control unit 104 ejects white ink from each of the ink jet heads 42WA and 42WB based on the corrected image data of the white plate, and prints a white plate image on the substrate 1.

By printing based on the image data corrected in this way, a printed matter of a desired size can be manufactured. Furthermore, in the present embodiment, the correction accuracy can be improved by measuring the cue mark printed on the substrate 1 immediately before by the first ejection device 30A using the first measurement device 52A, the second measurement device 52B, and the third measurement device 52C. For example, in a case in which a mark printed by another device is measured and corrected, it is necessary to take into account the difference between that mark and the actual ejection by the first ejection device 30A. Therefore, there is a disadvantage that the processing is complicated and the correction accuracy decreases.

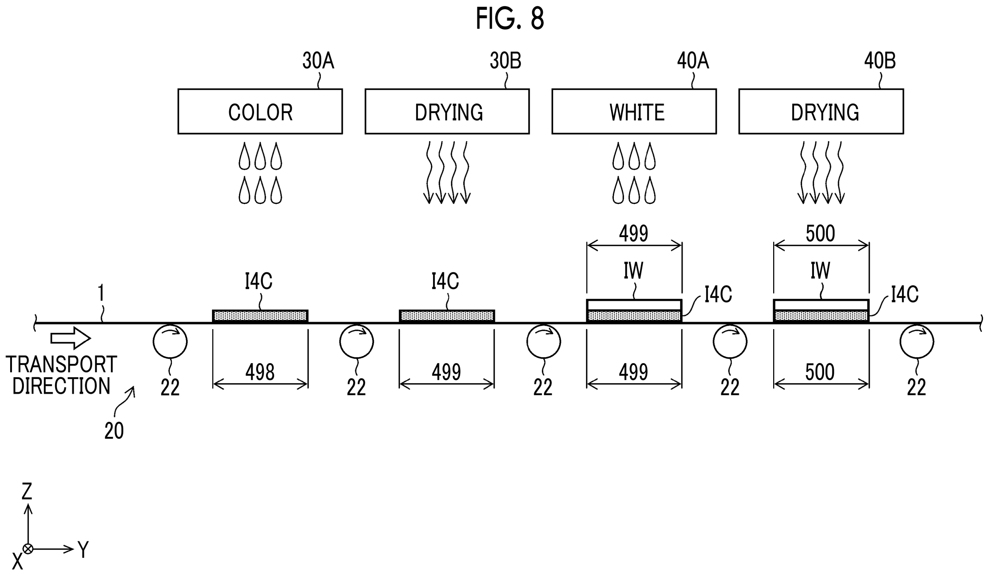

FIG. 8 is a diagram for describing printing based on the corrected image data. FIG. 8 shows the side surface of the substrate 1 being transported through the first ejection device 30A, the first drying device 30B, the second ejection device 40A, and the second drying device 40B in that order.

The color plate image I4C shown in FIG. 8 is an image printed by the first ejection device 30A. Here, the correct dimension in the transport direction of the image data of the color plate before correction is 500 mm, and the correct dimension in the transport direction of the image data of the color plate after correction is 498 mm. Therefore, the length of the color plate image I4C in the transport direction in a case of being printed by the first ejection device 30A is 498 mm.

The substrate 1 on which the color plate image I4C is printed is heated in the first drying device 30B, and the ink of the color plate image I4C is dried. The length of the color plate image I4C in the transport direction in a case of being discharged from the first drying device 30B is, for example, 499 mm because the substrate 1 is extended by heat.

The white plate image IW shown in FIG. 8 is an image printed by the second ejection device 40A. Here, the correct dimension in the transport direction of the image data of the white plate before correction is 500 mm, and the correct dimension in the transport direction of the image data of the white plate after correction is 499 mm. Therefore, the length of the white plate image IW in the transport direction in a case of being printed by the second ejection device 40A is 499 mm. The length of the color plate image I4C in the transport direction in a case of passing through the second ejection device 40A is also 499 mm, and the white plate image IW is printed over the entire color plate image I4C.

The substrate 1 on which the white plate image IW is printed is heated in the second drying device 40B, and the ink of the white plate image IW is dried. The lengths of the color plate image I4C and the white plate image IW in the transport direction in a case of being discharged from the second drying device 40B are 500 mm because the substrate 1 is extended by heat. That is, the image is printed in the same size as the correct dimension of the image data.

Although the transport direction has been described here, the correction can be similarly performed in the width direction. As described above, according to the present embodiment, the state of the substrate is acquired and printing is performed using image data corrected based on the state of the substrate, and therefore a print image of the desired size can be printed without any misalignment between the color plate image and the white plate image.

The present embodiment is characterized by performing measurement and calculations in real time on actual printed matter, and can acquire the state of the substrate without being affected by the type of ink, type of substrate, or drying conditions.

<Modification Example>

In the present embodiment, the overall control unit 100 corrects the size of the image data, but correcting the size of the image data is not limited to the ink jet printing system 10A. For example, a computer (not shown) connected to the ink jet printing system 10A via a communication interface may acquire the image data and the correction values calculated in Steps S5 and S6, and correct the image data. In this case, the ink jet printing system 10A may acquire the corrected image data from the computer and print the image data.

In addition, the correction values calculated in Steps S5 and S6 may be displayed on the output device 112 of the ink jet printing system 10A or on the display of a computer connected to the ink jet printing system 10A via a communication interface, and the user may correct the image data based on the displayed correction values. In this case, the ink jet printing system 10A may acquire the corrected image data.

In the present embodiment, the overall control unit 100 calculates the correction values, but the calculation of the correction values is not limited to the ink jet printing system 10A. For example, a computer connected to the ink jet printing system 10A via a communication interface may acquire the state of the substrate measured in Steps S2 to S4 and calculate the correction values. In this case, the ink jet printing system 10A may acquire the calculated correction value from the computer and correct the image data.

In addition, the state of the substrate measured in Steps S2 to S4 may be displayed on the output device 112 of the ink jet printing system 10A or on the display of a computer connected to the ink jet printing system 10A via a communication interface, and the user may calculate a correction value based on the displayed state of the substrate. In this case, the calculated correction value may be acquired by the ink jet printing system 10A.

Further, a computer connected to the ink jet printing system 10A via a communication interface may acquire the image data and the state of the substrate measured in Steps S2 to S4, calculate a correction value, and correct the image data with the calculated correction value. In this case, the ink jet printing system 10A may acquire the corrected image data from the computer and print the image data.

In these modification examples, the "ink jet printing system 10A" may be interpreted as a system including "a computer connected to the ink jet printing system 10A via a communication interface".

In addition, as in the present embodiment, automatically correcting image data during continuous printing is preferable because it reduces the waste of the substrate 1 that is consumed during the acceleration and deceleration of the transport of the substrate 1, thereby reducing the amount of the substrate 1 that is wasted.

In the present embodiment, measurement devices are installed at three locations as a method for more accurate dimensional adjustment. However, in a case in which it is desired to focus on simply correcting the misalignment between the color plate and the white plate, the substrate information acquisition unit 50 can be configured to comprise only two measurement devices, namely the first measurement device 52A and the second measurement device 52B.

In this case, an image size magnification SL4CD [unit: %] of the color plate image in the transport direction and an image size magnification SW4CD [unit: %] of the color plate image in the width direction can be calculated using the following Equations 12 and 13, respectively.

$$SL4CD = L2/L1 \times 100 \ ... \ (Equation\ 12)$$

$$SW4CD = W2/W1 \times 100 \ ... \ (Equation\ 13)$$

The image size magnification SL4CD is a correction value for the image data of the color plate in the transport direction, and the image size magnification SW4CD is a correction value for the image data of the color plate in the width direction.

<Others>

The technical scope of the present invention is not limited to the scope described in the above embodiment. The configurations and the like in each embodiment can be appropriately combined between the embodiments without departing from the spirit of the present invention.

Explanation of References

10, 10A: ink jet printing system
20: transport device
22: pass roller
30: first printing device
30A: first ejection device
30B: first drying device
32C: ink jet head
32K: ink jet head
32M: ink jet head
32Y: ink jet head
40: second printing device
40A: second ejection device
40B: second drying device
42WA: ink jet head
42WB: ink jet head
50: substrate information acquisition unit
52: measurement device
52A: first measurement device
52B: second measurement device
52C: third measurement device
54: mark sensor
56: edge sensor
56A: light projecting section
56B: light receiving section
58: edge sensor
58A: light projecting section
58B: light receiving section
100: overall control unit
100A: processor
100B: memory
102: transport control unit
104: ejection control unit
106: drying control unit
108: measurement control unit
110: input device
112: output device
I4C: color plate image
IP: print image
IW: white plate image
MQ: cue mark
S1 to S8: method for manufacturing printed matter

## Claims

1. A printing system that prints an image by ejecting a liquid onto a substrate, the printing system comprising:

   a transport device that transports the substrate along a transport path;
   a first ejection device that ejects a first liquid onto the substrate based on first image data;
   a first measurement device that measures a state of the substrate;
   a first drying device that dries the liquid ejected onto the substrate;
   a second measurement device that measures the state of the substrate;
   a second ejection device that ejects a second liquid onto the substrate based on second image data;
   at least one processor; and
   at least one memory that stores an instruction to be executed by the at least one processor,
   wherein the transport device transports the substrate in an order of the first ejection device, the first measurement device, the first drying device, the second measurement device, and the second ejection device,
   the first measurement device and the second measurement device each detect a mark printed on the substrate with the first liquid to measure the state of the substrate, and
the at least one processor calculates a first correction value for correcting the first image data based on a measurement result of the first measurement device and a measurement result of the second measurement device.

2. The printing system according to claim 1,
wherein the at least one processor causes the first correction value to be displayed on a display.

3. The printing system according to claim 1,
wherein the at least one processor corrects the first image data with the first correction value.

4. The printing system according to claim 1,
wherein the first ejection device ejects the first liquid based on the first image data corrected based on the first correction value.

5. A printing system that prints an image by ejecting a liquid onto a substrate, the printing system comprising:

   a transport device that transports the substrate along a transport path;
   a first ejection device that ejects a first liquid onto the substrate based on first image data;
   a first measurement device that measures a state of the substrate;
   a first drying device that dries the liquid ejected onto the substrate;
   a second measurement device that measures the state of the substrate;
   a second ejection device that ejects a second liquid onto the substrate based on second image data;
   a second drying device that dries the liquid ejected onto the substrate;
   a third measurement device that measures the state of the substrate;
   at least one processor; and
   at least one memory that stores an instruction to be executed by the at least one processor,
   wherein the transport device transports the substrate in an order of the first ejection device, the first measurement device, the first drying device, the second measurement device, the second ejection device, the second drying device, and the third measurement device, and
   the at least one processor

      calculates a first correction value for correcting the first image data based on a measurement result of the first measurement device and a measurement result of the third measurement device, and
      calculates a second correction value for correcting the second image data based on a measurement result of the second measurement device and the measurement result of the third measurement device.

6. The printing system according to claim 5,
wherein the at least one processor causes the first correction value and the second correction value to be displayed on a display.

7. The printing system according to claim 5,
wherein the first measurement device, the second measurement device, and the third measurement device each detect a mark printed on the substrate with the first liquid to measure the state of the substrate.

8. The printing system according to claim 5,
wherein the at least one processor

   corrects the first image data with the first correction value, and
   corrects the second image data with the second correction value.

9. The printing system according to claim 5,

   wherein the first ejection device ejects the first liquid based on the first image data corrected based on the first correction value, and
   the second ejection device ejects the second liquid based on the second image data corrected based on the second correction value.

10. The printing system according to claim 1 or 7,

   wherein the state of the substrate includes a state of the substrate with respect to a first direction in which the substrate is transported, and
   the state of the substrate with respect to the first direction is measured based on an interval between a plurality of the marks.

11. The printing system according to claim 10, further comprising an optical mark sensor that detects the interval between the marks.

12. The printing system according to claim 10,

   wherein the state of the substrate includes a state of the substrate with respect to a second direction orthogonal to the first direction, and
   the state of the substrate with respect to the second direction is measured based on a width of the substrate in the second direction.

13. The printing system according to claim 12, further comprising an optical edge sensor that detects the width of the substrate in the second direction.

14. The printing system according to claim 5,

   wherein a measurement timing in the second measurement device is later than a measurement timing in the first measurement device, and
   a measurement timing in the third measurement device is later than the measurement timing in the second measurement device.

15. The printing system according to claim 14,
   wherein the first measurement device, the second measurement device, and the third measurement device each measure a state of a first measurement position of the substrate.

16. The printing system according to claim 1 or 5,
   wherein the second ejection device ejects the second liquid onto an image printed by the first ejection device.

17. The printing system according to claim 1 or 5,

   wherein the substrate is transparent, and
   the second liquid includes white ink.

EP 4 696 510 A1

# FIG. 1

# FIG. 2

EP 4 696 510 A1

## FIG. 3

FIG. 4

52

54

MQ

MQ

MQ

IP

IP

IP

1

6 mm

100 TO 1400 mm

18 mm

12 mm

Z

X

Y

FIG. 5

# FIG. 6

OVERALL CONTROL UNIT

PROCESSOR — 100A

MEMORY — 100B

10A

100

| TRANSPORT CONTROL UNIT 102 | EJECTION CONTROL UNIT 104 | DRYING CONTROL UNIT 106 | MEASUREMENT CONTROL UNIT 108 | INPUT DEVICE 110 | OUTPUT DEVICE 112 |

TRANSPORT DEVICE — 20

FIRST EJECTION DEVICE — 30A

SECOND EJECTION DEVICE — 40A

FIRST DRYING DEVICE — 30B

SECOND DRYING DEVICE — 40B

SUBSTRATE INFORMATION ACQUISITION UNIT — 50

EP 4 696 510 A1

# FIG. 7

```
         ┌─────────────┐
         │    START    │
         └─────────────┘
                │
                ▼
┌───────────────────────────────┐
│       PRINT CUE MARKS         │── S1
└───────────────────────────────┘
                │
                ▼
┌───────────────────────────────┐
│   MEASURE STATE OF SUBSTRATE  │── S2
│        AT FIRST POSITION      │
└───────────────────────────────┘
                │
                ▼
┌───────────────────────────────┐
│   MEASURE STATE OF SUBSTRATE  │── S3
│       AT SECOND POSITION      │
└───────────────────────────────┘
                │
                ▼
┌───────────────────────────────┐
│   MEASURE STATE OF SUBSTRATE  │── S4
│        AT THIRD POSITION      │
└───────────────────────────────┘
                │
                ▼
┌───────────────────────────────┐
│   CALCULATE CORRECTION VALUE  │── S5
│       IN TRANSPORT DIRECTION  │
└───────────────────────────────┘
                │
                ▼
┌───────────────────────────────┐
│   CALCULATE CORRECTION VALUE  │── S6
│        IN WIDTH DIRECTION     │
└───────────────────────────────┘
                │
                ▼
┌───────────────────────────────┐
│    CORRECT SIZE OF IMAGE DATA │── S7
└───────────────────────────────┘
                │
                ▼
┌───────────────────────────────┐
│        PRINT BASED ON         │── S8
│     CORRECTED IMAGE DATA       │
└───────────────────────────────┘
                │
                ▼
         ┌─────────────┐
         │     END     │
         └─────────────┘
```

# FIG. 8

EP 4 696 510 A1

## INTERNATIONAL SEARCH REPORT

| International application No. |
| --- |
| **PCT/JP2024/011587** |

**A.    CLASSIFICATION OF SUBJECT MATTER**

*B41J 2/01*(2006.01)i; *B41J 2/21*(2006.01)i
FI:    B41J2/01 203; B41J2/01 125; B41J2/01 451; B41J2/21

According to International Patent Classification (IPC) or to both national classification and IPC

**B.    FIELDS SEARCHED**

Minimum documentation searched (classification system followed by classification symbols)

B41J2/01-2/215

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | US 2016/0167361 A1 (HEWLETT-PACKARD DEVELOPMENT COMPANY, L.P.) 16 June 2016 (2016-06-16) paragraphs [0014], [0058]-[0102], fig. 3 | 1-6, 8-9, 14 |
| Y | | 10-13 |
| Y | JP 2023-034928 A (SCREEN HOLDINGS CO., LTD.) 13 March 2023 (2023-03-13) paragraphs [0028], [0050]-[0079], fig. 4-7 | 10-13 |
| Y | JP 2019-104214 A (RICOH COMPANY, LTD.) 27 June 2019 (2019-06-27) paragraph [0043] | 13 |
| Y | JP 2021-142648 A (SCREEN HOLDINGS CO., LTD.) 24 September 2021 (2021-09-24) paragraphs [0026], [0032] | 13 |
| A | JP 2020-100005 A (SEIKO EPSON CORP.) 02 July 2020 (2020-07-02) entire text, all drawings | 1-17 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 April 2024** | **07 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

| International application No. |
| --- |
| **PCT/JP2024/011587** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2022-052562 A (SCREEN HOLDINGS CO., LTD.) 04 April 2022 (2022-04-04) entire text, all drawings | 1-17 |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| US | 2016/0167361 | A1 | 16 June 2016 | WO | 2015/016900 | A1 | |
| | | | | EP | 3028132 | A1 | |
| | | | | CN | 105579951 | A | |
| JP | 2023-034928 | A | 13 March 2023 | (Family: none) | | | |
| JP | 2019-104214 | A | 27 June 2019 | (Family: none) | | | |
| JP | 2021-142648 | A | 24 September 2021 | US | 2021/0287061 | A1 | |
| | | | | paragraphs [0034], [0040] | | | |
| JP | 2020-100005 | A | 02 July 2020 | US | 2020/0198368 | A1 | |
| | | | | entire text, all drawings | | | |
| | | | | CN | 111347797 | A | |
| JP | 2022-052562 | A | 04 April 2022 | WO | 2022/064824 | A1 | |
| | | | | entire text, all drawings | | | |

Form PCT/ISA/210 (patent family annex) (July 2022)

**REFERENCES CITED IN THE DESCRIPTION**

**Patent documents cited in the description**

- JP 2021142648 A